# EUROPEAN PATENT APPLICATION

(11) **EP 2 775 333 A1**
(43) Date of publication of application: **10.09.2014**
(21) Application number: 13158158.9
(22) Date of filing: 07.03.2013
(51) Int. Cl.: G02B 6/42, G08C 23/02, H04N 5/64

(54) **Electronic device with shared light guide**

(71) Applicant: TP Vision Holding B.V., 5656 AE Eindhoven (NL)
(72) Inventor: Seynaeve, Dirck, 1097 JB Amsterdam (NL)
(74) Representative: Busch, Patrick

(57) **Abstract**

An audio/video device comprises an enclosing cabinet (11) and an electronic circuitry (14) inside the cabinet. The circuitry comprises interface components being light sources (15) and optical detectors (16). Light signals associated with the interface components are received as a control signal or emitted as a feedback signal. The audio/video device comprises a single light guide (17) for transporting the light signals inside the cabinet between a hole or transparent part (12) in the enclosing cabinet and the respective interface components. Interference between the light signals is prevented by optical filters and/or by time multiplexed operation of the interface components.

## Description

### FIELD OF THE INVENTION

The present invention relates to electronic audio and video devices that emit and receive light signals, and in particular, but not exclusively, to display devices and televisions.

### BACKGROUND OF THE INVENTION

Many electronic consumer devices emit and/or receive light signals during their operation for signaling and control purposes. For example, many DVD and Blu-ray players are controlled using an infrared light based remote control. They often contain LED indicators that serve, for example, to signal the standby status of the device to the user.

In televisions these same functions of infrared remote control and status LEDs are commonly present. In addition a television is often equipped with a light sensor that measures the ambient illumination level in the environment so that the brightness of the television display may be adapted to the environment. More and different light signals may be received or emitted by other devices.

The light received or emitted for signaling and control purposes commonly travels through holes in the front of the device's cabinet, or through parts of the cabinet that are optically transparent. The electronics related to the optical functions, such as LEDs, sensors and driving electronics are commonly placed on a printed circuit board placed behind these holes.

In modern flat screen television there is a trend to minimize the cabinet size, leaving as much as possible only a narrow rim around the display as seen from the front. This conflicts with the need for the optical elements and related electronics mentioned above. A possible solution is to use a light guide to transport the light for the remote control as described in US 5,036,188 A. This allows the infrared sensor and related electronics to be located behind the display instead of behind the optical hole in the cabinet.

### SUMMARY OF INVENTION

It is an object of the invention to provide a low-cost solution for electronic audio and video devices to handle multiple light signals while requiring a limited amount of space in the enclosing cabinet of the device.

For this purpose, according to a first aspect of the invention, an audio/video device comprises an enclosing cabinet and an electronic circuitry comprising at least two interface components, said circuitry being located within the cabinet capable of using at least two light signals, each associated with one of the interface components, and being received as a control signal or emitted as a feedback signal, where the audio/video device comprises a single light guide for transporting the light signals inside the cabinet between a hole or transparent part in the exterior of the enclosing cabinet and the respective interface components.

These measures have the effect that in an audio/video device multiple detectors and light sources can be mounted on the main circuit board while being optically connected to the outside environment as their function requires. This saves the cost of an extra circuit board, while the additional cost introduced is limited to only a single light guide. Also it saves space in parts of the enclosing cabinet, which may be favorable to the design, for example in narrow-rimmed flat televisions.

In an embodiment of the device at least one interface component comprises a light source for emitting a first one of the light signals and at least one interface component comprises a light detector for detection of a second one of the light signals, the device comprising a control circuit for activating the detector and light source in a time multiplexed mode to prevent interference between the detection and the emission.

A further embodiment of the device comprises an optical filter for shielding at least one interface component, comprising a detector, from light not intended for said detector by filtering out optical wavelengths different from the optical wavelengths of the light signals that are intended for said detector.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a display device with a circuit board, LEDs and detectors, a light guide and a hole in the device cabinet;
Fig. 2 shows a circuit board with detectors and LEDs with a light guide;
Fig. 3 shows a circuit board with detectors and LEDs with a light guide with a reflective surface;
Fig. 4 shows a circuit board with detectors and LEDs with a forked light guide;
Fig. 5 shows how a detector and an LED are alternatingly switched between ON and OFF states;
Fig. 6 shows a circuit to control the switching of a detector and an LED;
Fig. 7 shows a front view of a display device with a hole in a narrow cabinet border.

### DETAILED DESCRIPTION OF EMBODIMENTS

The following description focusses on embodiments of the invention applied in a flat television. However, it must be appreciated that the invention is not limited to televisions only but may be applied in other audio/video devices such as, for example, computer monitors, DVD players, Blu-ray Disk players or Home Theater Systems.

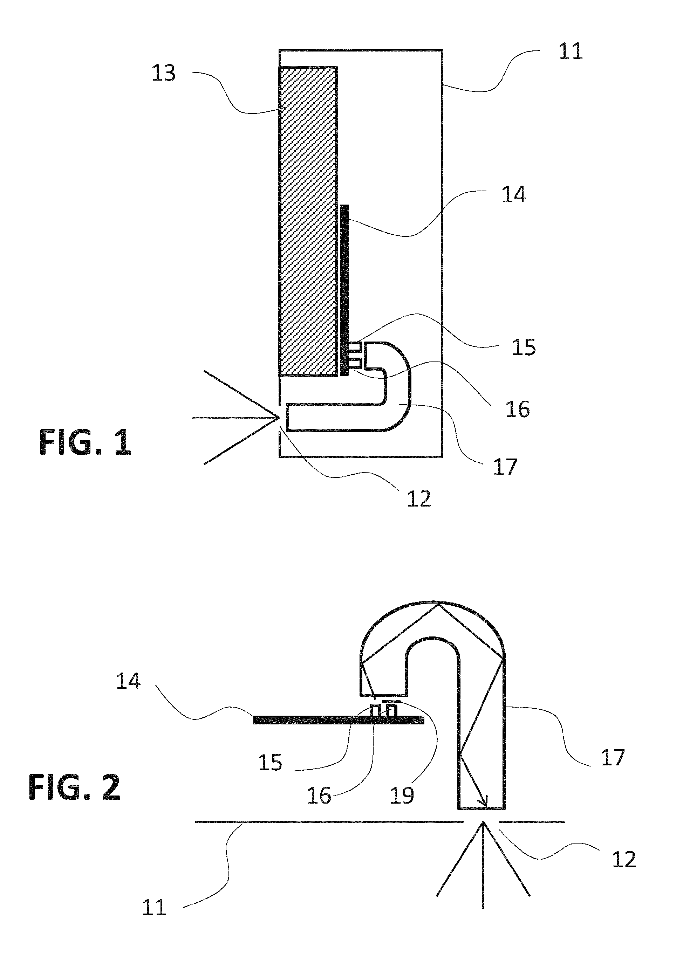

Figure 1 illustrates a display device such as a flat television, shown in cross section. An enclosing cabinet 11 contains a display 13. This display may for example be an LCD display or an OLED display. Behind the display, as seen from the front of the device, a circuit board 14 is located, containing the main electronic circuitry of the television.

Light sources 15 and detectors 16, together referred to as interface components, form part of this circuitry. The light sources 15 may be LEDs or other light sources. These light sources emit light that is intended to be radiated outside the cabinet of the television. For example, a light source may include an LED that is used to indicate the power state of the device to the users. This LED may switch on or off, or change colour, to indicate that the television is in standby, or is starting up, or is operational. Another example of a light source is an infra-red LED that may send signals to other devices in order to control them.

The detectors 16 may for example be photodiodes, or photoconductive devices. They serve to receive light signals that control the operation of the device. For example, an infra-red detector may be used to receive infra-red signals emitted by a remote control operated by the user in order to control the device. As another example, a visible light detector may be used to measure the level of ambient light outside the device cabinet, so the brightness of the display 13 can be adjusted to the environment. Yet another example is an image sensor such as a CCD, that capture images used for video communication.

The light emitted from the light sources 15 or to be detected by the detectors 16 has to travel through a hole or transparent section 12 located in the exterior of the enclosing cabinet 11 of the device. To transport the light between the hole or transparent section 12 and the respective light sources 15 and detectors 16, a light guide 17 is used. This light guide has to be transparent for the wavelengths of light that is to travel through it, commonly visible light or infra-red light. Glass may be used or colorless plastics such as PMMA (polymethylmethacrylate). The light guide may consist of one or more pieces of solid material, fitted together. It may also consist of a bundle of optical fibers, possibly with optical coupling elements at the ends.

Figure 2 illustrates a basic shape of a light guide 17. In this embodiment a simple single light guide is used. The light guide consists of an elongated tube, in which light propagates through total internal reflection. This principle is well known from light guides used in LCD backlights for example. One end of the light guide is positioned over the interface components (15,16) mounted closely together on the circuit board 14. The other end of the light guide is positioned over the hole or transparent section 12 in the enclosing cabinet 11. Light emitted by a light source 15 enters the light guide at one end and exits the light guide at the other end, leaving the cabinet through the hole or transparent section 12. Light from outside the cabinet enters through the hole or transparent section 12, travels through the light guide and is detected by the detectors 16.

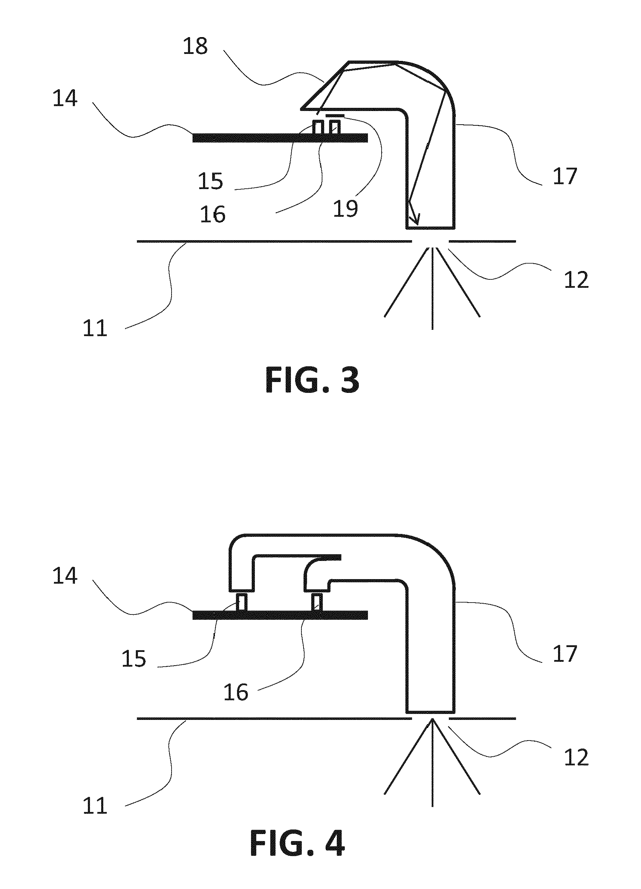

Figure 3 illustrates another embodiment of the light guide. The light guide 17 is now equipped with a reflecting surface 18 placed under an angle, such that the light travelling through the light guide may be reflected towards the detectors 16 while the light guide itself is positioned essentially in parallel to the circuit board 14. Similarly, light emitted from a light source 15 is reflected into the light guide 17 by the reflecting surface 18. The placement of the light guide in parallel to the circuit board saves space in the cabinet, which is beneficial in devices such as flat televisions, where it is desirable to keep the overall depth of the device to a minimum. In Figure 3 the light guide is illustrated as a single part, but the end with the reflecting surface may well be added as a separate optical element.

Figure 4 illustrates yet another embodiment of the light guide. In this case the light guide 17 is forked at the end of the interface components (15,16), which enables these to be positioned more apart on the circuit board 14. In this embodiment the loss of light may be higher than in the above embodiments, but in many cases this may be affordable.

It is clear that many other embodiments of the light guide are possible, and that features of the embodiments presented here can be combined in different ways. For example, a reflective surface under an angle may be used at the light guide's end closest to the cabinet hole. As another example, the forked ends of the light guide shown in Figure 4 may each be equipped with reflecting surfaces under an angle.

Light signals traveling through the light guides for different purposes may interfere with each other or hamper each other's detection. An effective way of reducing such interference is the use of an optical filter over a detector to filter out any light not intended for that detector. For example, a detector used to detect infra-red remote control signals may operate better when shielded from visible light. Figure 2 and Figure 3 both show an optical filter 19 positioned close to detector 16 in such a way that the filter blocks light from reaching the detector unintentionally. This only works if the interfering light signals have different properties, for example different wavelengths or polarization, so they can be separated by an optical filter.

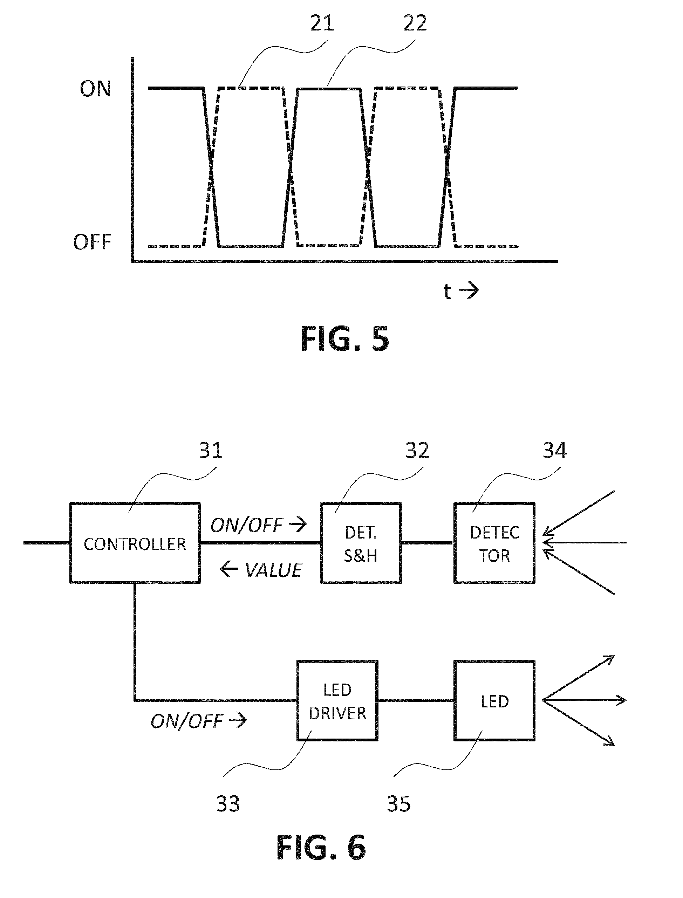

If light signals interfere with each other that are of the same wavelength, they may be operated in a time multiplexed mode to avoid interference. For example, light emitted by a power indicator LED could hamper the correct measurement of ambient light levels. Figure 5 illustrates how the two interfering light signals can be time multiplexed. The graph shows how a light source is alternatingly switched between an ON state and an OFF state, indicated by trace 21. At the same time a detector may be alternatingly switched between and OFF state and an ON state, indicated by trace 22. The synchronization is such that the light source is always OFF while the detector is ON, and vice versa. Thus the light emitted by the light source will not interfere with the detection of other light in the same region of wavelengths. The switching is done sufficiently fast so as to not be visible to the human eye as flicker, typically at more than 100Hz.

The off state of a detector as described above could mean literally that the detector is off. It can also mean that the detector is on, but that measurement results of the detector are not used during intervals in which the interfering light source is switched on.

Figure 6 illustrates how the above switching may be controlled. A controller 31 controls both light emission and light detection. To control light emission, the controller 31 switches an LED driver 33 on and off at the right moments. This results in light being emitted by an LED 35 at the right moments. To control the light detection, the controller 31 sends on and off signals to a sample and hold circuit 32, which takes measurements from the detector 34. The synchronization is such that measurement values are only obtained while the LED is off, and the measure values are returned to the controller 31. Different control circuits could be devised, depending on the nature of the interface components, and on the integration with other functions of the device.

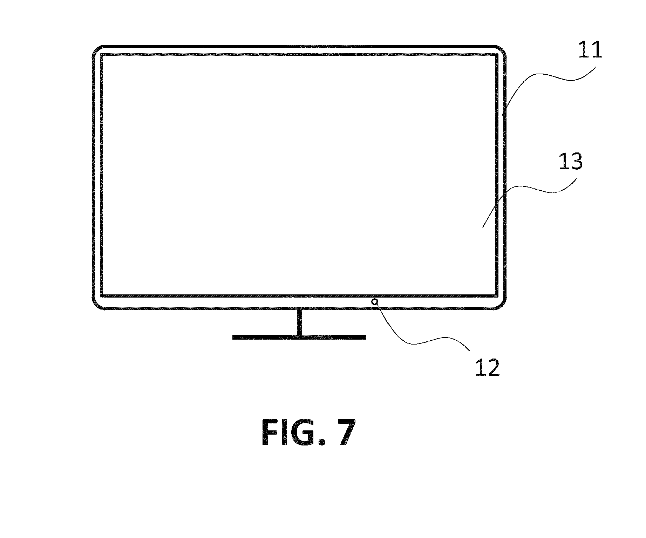

Figure 7 shows a front view of a display device such as a television. This illustrates how the hole or transparent section 12 can be placed in the front side of the cabinet 11 that commonly surrounds the display 13 only as a narrow border or rim. The hole could of course be positioned in the top, bottom, left or right border of the cabinet, depending on the detailed design of the device.

In non-display audio/video devices there is more freedom in choosing the location of the hole or transparent section in the enclosing cabinet. It will commonly be located in the front of the cabinet, which is most convenient for receiving remote control light signals, and for sending optical feedback signals to a user.

## Claims

1. An audio/video device comprising an enclosing cabinet (11) and an electronic circuitry (14) comprising at least two interface components (15,16), said circuitry being located within the cabinet capable of using at least two light signals, each associated with one of the interface components, and being received as a control signal or emitted as a feedback signal, where the audio/video device comprises a single light guide (17) for transporting the light signals inside the cabinet between a hole or transparent part (12) in the exterior of the enclosing cabinet and the respective interface components.

2. A device according to claim 1 where at least one interface component comprises a light source (15) for emitting a first one of the light signals and at least one interface component comprises a light detector (16) for detection of a second one of the light signals, the device comprising a control circuit (31) for activating the detector (34) and light source (35) in a time multiplexed mode to prevent interference between the detection and the emission.

3. A device according to claim 1 or 2 comprising an optical filter (19) for shielding at least one interface component, comprising a detector (16), from light not intended for said detector by filtering out optical wavelengths different from the optical wavelengths of the light signals that are intended for said detector.

4. A device according to any of the previous claims where the device is a display device.

5. A display device according to claim 4, where the display area is substantially enclosed with a narrow cabinet border, and the hole or transparent section (12) of the enclosing cabinet (11) is located within said border.

6. A device according to any of the previous claims where at least one detector is arranged to detect light signals of a remote control device.

7. A device according to any of the previous claims where at least one light source is arranged to emit light signals indicating a status of the device to a user.

8. A device according to any of the previous claims where at least one detector is arranged to measure ambient light levels to control one or more functions of the device.

9. A device according to claim 8 where the controlled functions include a display brightness.
